# EUROPÄISCHE PATENTSCHRIFT

(11) **EP 0 942 810 B1**
(45) Veröffentlichungstag und Bekanntmachung des Hinweises auf die Patenterteilung: **01.10.2003**
(21) Anmeldenummer: 98945291.7
(22) Anmeldetag: 26.08.1998
(51) Int. Cl.: B25F 5/00, F16D 41/10

(54) **MITNAHMEVORRICHTUNG**
DRIVING DEVICE
DISPOSITIF D'ENTRAINEMENT

(30) Priorität: 26.08.1997 DE 29715257 U
(43) Veröffentlichungstag der Anmeldung: 22.09.1999
(73) Patentinhaber: Atlas Copco Electric Tools GmbH, 71364 Winnenden (DE)
(72) Erfinder: GEIS, Wilhelm, D-71397 Leutenbach (DE); MENRATH, Manuela, D-71364 Winnenden (DE)
(74) Vertreter: Riedel, Peter, Dipl.-Ing.
(86) Internationale Anmeldenummer: EP9805432
(87) Internationale Veröffentlichungsnummer: WO99010132

(56) Entgegenhaltungen:
- EP-A- 0 792 723
- DE-A- 4 447 480
- DE-U- 29 800 163
- US-A- 3 586 143
- US-A- 4 901 831
- US-A- 5 016 501

## Beschreibung

Die Erfindung betrifft eine Mitnahmevorrichtung für die Spindel eines motorgetriebenen, handgeführten Arbeitswerkzeugs, insbesondere nach dem Oberbegriff des Anspruchs 1.

In der US-A 3,243,023 ist eine gattungsgemäße Mitnahmevorrichtung beschrieben, die ein Antriebsteil mit vier Entriegelungselementen für die Klemmkörper eines Freilaufs aufweist, wobei die Entriegelungselemente zugleich als Klauen zur Mitnahme eines Abtriebsteils ausgebildet sind. Die drehmomentübertragenden Flächen an Klauen und Abtriebsteil sind bei dieser Lösung sehr klein ausgeführt und dadurch dem Verschleiß unterworfen.

Der Erfindung liegt die Aufgabe zugrunde, eine Mitnahmevorrichtung für die Spindel eines motorgetriebenen, handgeführten Arbeitswerkzeugs zu schaffen, die eine lange Lebensdauer aufweist.

Die Aufgabe wird gelöst durch die kennzeichnenden Merkmale des Anspruchs 1.

Durch die räumliche Trennung von Entriegelungselementen und Klauen besteht Platz für ausreichend dimensionierte drehmomentübertragende Mitnahmeflächen, die praktisch keinem Verschleiß unterliegen.

Durch die Einteiligkeit der Spindel und deren Hindurchführen durch den Abtriebs- und Antriebsteil besitzt diese eine einfache Gestalt und eine stabile Lagerung. Diese Lagerung der Spindel in Verbindung mit einer großzügig dimensionierten Lagerung des Antriebsteils auf der Spindel trägt zur langen Lebensdauer und zur Effizienz des Arbeitswerkzeuges bei, besonders wenn das Antriebsteil als Zahnrad ausgebildet ist. Sind dessen Zähne aus Kunststoff, so bieten sich Geräuschvorteile.

Dadurch, daß die axialen Klauen die Mitnahmeöffnungen durchragen, sind auch bei axialen Einbautoleranzen der Spindel immer die gesamten drehmomentübertragenden Mitnahmeflächen wirksam.

Durch die Anordnung der Entriegelungselemente und der Klauen ergeben sich Fertigungsvorteile beim Drehen und Fräsen des Antriebsteils. Dabei können die Klauen axial oder radial in die Mitnahmeöffnungen hindurch- bzw. hineinragen.

Das Tiefziehen bzw. Fließpressen des Abtriebsteils bietet unter anderem Vorteile bei der Fertigung der Nocken für die Klemmkörper und der Abflachung der Nabe. Der Abtriebsteil kann auch als dicke Scheibe ausgebildet sein, die vorzugsweise aus Sinterstahl besteht. Dies ermöglicht einen besonders verschleißarmen und sicheren Betrieb der Mitnahmevorrichtung. Die Zahl der Klemmkörper hängt von der Höhe der betrieblichen Belastung ab.

Der abtriebfeste Abschlußtopf dient zur Begrenzung der Axialbewegung der Klemmkörper des Freilaufs und damit deren Geräuschentwicklung. Das ist besonders wichtig bei Schiageinrichtungen. Bei anderen Längenverhältnissen kann der abtriebfeste Abschlußtopf durch eine Normscheibe ersetzt werden und bei fehlender Schlageinrichtung sogar entfallen.

Vorteilhafterweise sind die Klauenflächen der Klauen radial zu den Mitnahmeflächen der Mitnahmeöffnungen ausgerichtet. Dies ermöglicht günstige Drehmomentübertragungs- und Verschleißverhältnisse.

Eine besonders drehfeste Verbindung zwischen dem Abtriebsteil und der Spindel wird erreicht, indem der Abtriebsteil formschlüssig mit der Spindel verbunden ist.

Vorteilhafterweise ist der Abtriebsteil kraftschlüssig mit der Spindel verbunden. Dies kann beispielsweise über einen Preßsitz erreicht werden. Dadurch ist bei extremer Belastung der Spindel ein rutschkupplungsartiger Schlupf zwischen dem Abtriebsteil und der Spindel ermöglicht, so daß eine bruchbedingte Zerstörung vermieden werden kann.

Weitere Merkmale ergeben sich aus den weiteren Ansprüchen. In den Zeichnungen sind nachfolgend beschriebene Ausführungsbeispiele der Erfindung schematisch dargestellt.

Es zeigen:
- Fig. 1: einen Längsschnitt durch die Mitnahmevorrichtung,
- Fig. 2: einen Querschnitt durch die Mitnahmevorrichtung,
- Fig. 3: einen Längsschnitt durch eine andere Mitnahmevorrichtung,
- Fig. 4: einen Querschnitt durch die andere Mitnahmevorrichtung,
- Fig. 5: einen Längsschnitt durch eine bevorzugte weitere Ausführungsform der Mitnahmevorrichtung,
- Fig. 6: einen Querschnitt durch die bevorzugte weitere Ausführungsform der Mitnahmevorrichtung.

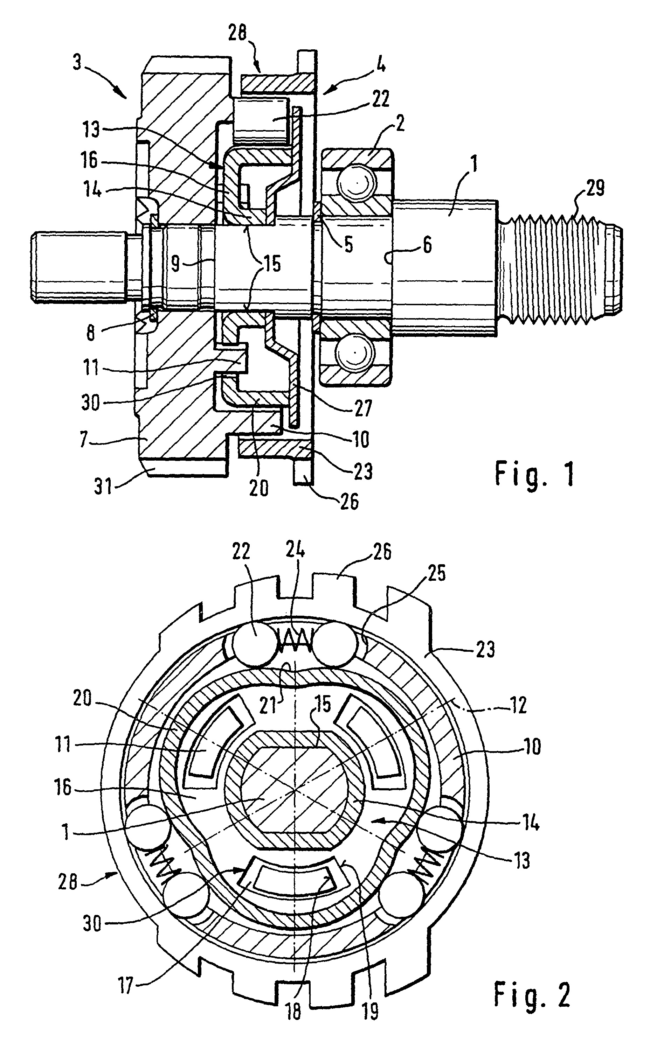

Die Fig. 1 und 2 zeigen eine Spindel 1 mit einem Gewinde 29 für das Bohrfutter und einem gehäusefesten Kugellager 2 sowie mit einem Antriebsteil 3 und einem Abtriebsteil 4.

Der Innenring des Kugellagers 2 ist durch einen Sicherungsring 5 an einer Schulter 6 der Spindel 1 axial festgelegt. Ein am antriebsseitigen Ende der Spindel 1 vorgesehenes zweites Lager ist nicht dargestellt.

Der Antriebsteil 3 besteht aus einem Zahnrad 7 mit Stirnverzahnung, das auf der Spindel 1 gelagert ist und durch einen weiteren Sicherungsring 8 und einen Absatz 9 der Spindel 1 mit Spiel axial fixiert ist. Die Verzahnung kann aus Geräuschgründen aus Kunststoff bestehen. An der dem Abtriebsteil 4 zugewandten Stirnseite des Zahnrads 7 sind je drei Entriegelungselemente 10 und axiale Klauen 11 paarweise und konzentrisch zueinander angeordnet. Die drei Paare besitzen jeweils eine gemeinsame Mittellinie 12, wobei benachbarte Mittellinien 12 gleiche Abstände aufweisen.

Der Antriebsteil 3 kann auch als Planetengetriebe ausgebildet sein und eine Zweigangschaltung aufweisen.

Der Abtriebsteil 4 besitzt ein tiefgezogenes, topfförmiges Blechteil 13, dessen Nabe 14 über zwei Abflachungen 15 mit der Spindel 1 drehfest verbunden ist. Die Nabe 14 kann auch über Preßsitz oder andere Arten von Kraft- oder Formschluß mit der Spindel 1 drehfest verbunden sein. In der dem Antriebsteil 3 zugewandten Wand 16 des Blechteils 13 sind drei als Ringsegmente 17 ausgebildete Mitnahmeöffnungen 30 vorgesehen, in die die drei axialen Klauen 11 des Zahnrads 7 mit radialem und Drehwinkelspiel axial eingreifen. Die in Drehrichtung einander zugewandten Klauenflächen 18 und Mitnahmeflächen 19 des Blechteils 13 sind radial ausgerichtet und stehen sich mit Spiel gegenüber.

Das Blechteil 13 besitzt eine äußere ringförmige Wand 20, deren Außenkontur als Nocken 21 für Klemmkörper 22 ausgebildet ist. Die Klemmkörper 22 sitzen paarweise im Bereich zwischen den Mitnahmeöffnungen 30 und sind zwischen der äußeren Wand 20 und einem gehäusefesten Ring 23 angeordnet. Sie werden durch Federelemente 24 (zum Beispiel Metall oder Kunststoffedern) auseinandergedrückt und auf den Nocken 21 in Klemmposition gehalten. Die Nocken 21, die Klemmkörper 22 und der gehäusefeste Ring 23 bilden zusammen einen Freilauf 28. Die Zahl der Klemmkörperpaare richtet sich nach den zu erwartenden Betriebsdrehmomenten.

Die Entriegelungselemente 10 umgreifen die äußere, ringförmige Wand 20 des Blechteils 13 mit Spiel. Sie haben an ihren den Klemmkörpern 22 zugewandten Enden 25 ein diesen angepaßtes Profil. Der Abstand des Profils von den Klemmkörpern 22 ist kleiner als der zwischen den Klauenflächen 18 und den Mitnahmeflächen 19.

Der gehäusefeste Ring 23 ist über einen Formschluß, zum Beispiel eine Verzahnung 26 mit dem nicht dargestellten Gehäuse des Arbeitswerkzeugs drehfest verbunden.

Das Blechteil 13 weist auf der dem Abtriebsteil 4 abgewandten Seite einen mit der Spindel 1 drehfest verbundenen Abschlußtopf 27 auf, der die Axialbewegung der Klemmkörper 22 und damit deren Geräuschentwicklung begrenzt. Das ist besonders wichtig bei einer Schlagvorrichtung. Fehlt diese, kann der Abschlußtopf 27 entfallen.

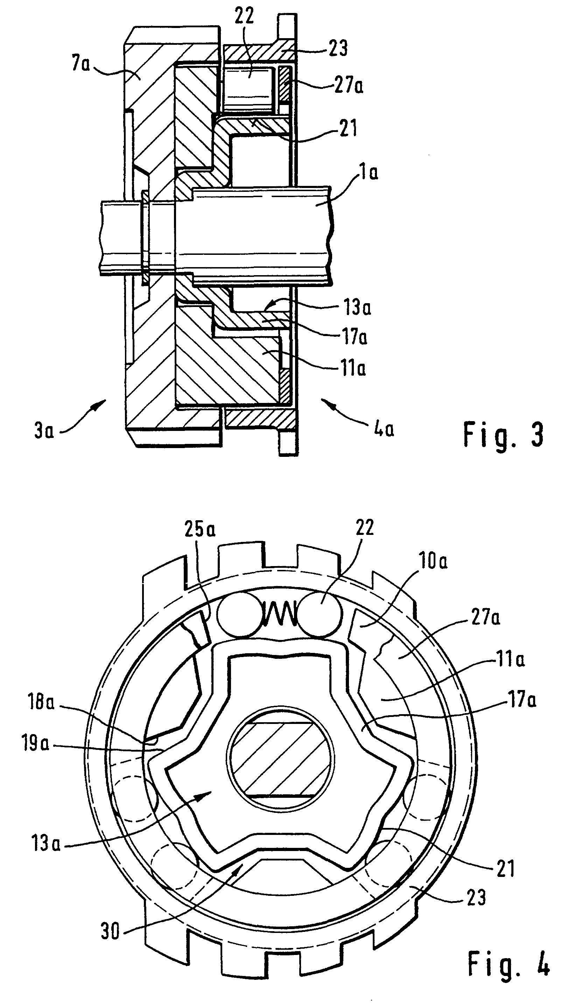

In den Figuren 3 und 4 ist eine andere Version der Mitnahmevorrichtung dargestellt. Gleiche Teile tragen die gleiche Bezeichnung wie in Fig. 1 und 2, analoge Teile eine um "a" erweiterte Bezeichnung.

Bei dieser Version ragen andere Klauen 11a eines anderen Zahnrads 7a eines anderen Antriebsteils 3a mit Spiel in dazu passende radiale Vertiefungen 17a eines zu einem anderen Abtriebsteil 4a gehörenden Fließpreßteils 13a ein. Dieses ist mit einer anderen Spindel 1a drehfest verbunden.

Am Umfang des Fließpreßteils 13a sind zwischen den radialen Vertiefungen 17a Nocken 21 entsprechend Fig. 1 und 2 angeordnet, die über Klemmkörper 22 mit dem gehäusefesten Ring 23 verbindbar sind. Die Klemmkörper 22 werden durch einen Abschlußring 27a axial gehalten, der mit den anderen Klauen 11a verbunden ist.

Das Drehmoment des Antriebsmotors wird durch andere Klauenflächen 18a auf andere Mitnahmeflächen 19a des Fließpreßteils 13a übertragen.

Andere Entriegelungselemente 10a umgreifen das Fließpreßteil 13a mit Spiel. Der Abstand zwischen deren den Klemmkörpern 22 zugewandten anderen Enden 25a und den Klemmkörpern 22 ist kleiner als zwischen den anderen Klauenflächen 18a und den anderen Mitnahmeflächen 19a des Fließpreßteils 13a.

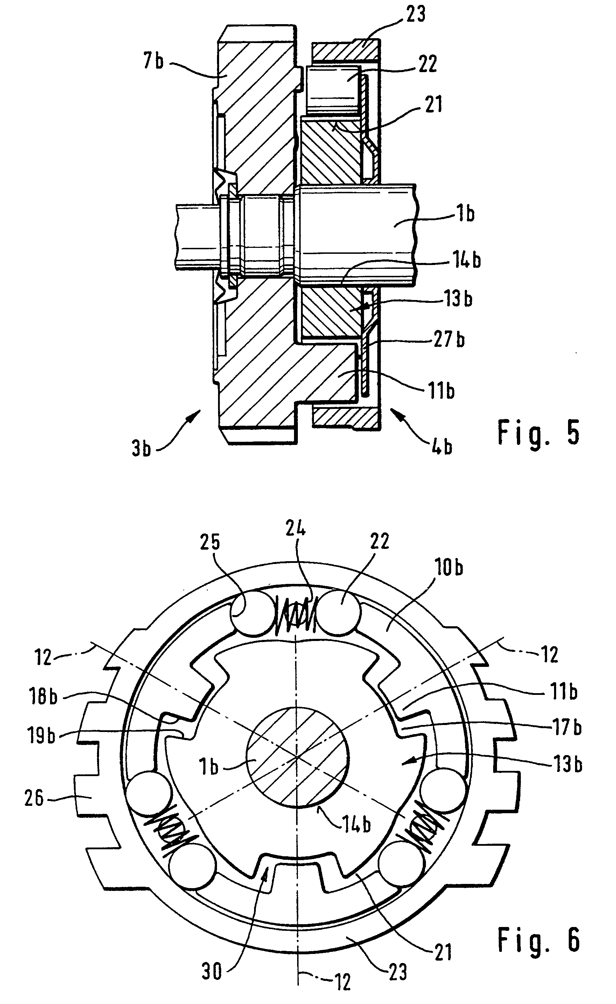

In den Fig. 5 und 6 ist eine bevorzugte weitere Ausführungsvariante der Mitnahmevorrichtung dargestellt. Gleiche Teile tragen die gleiche Bezeichnung wie in Fig. 1 und 2, analoge Teile eine um "b" erweiterte Bezeichnung.

Bei dieser Ausführungsvariante sind die Klauen 11b eines anderen Zahnrades 7b ähnlich ausgebildet wie die in Fig. 4 gezeigten Klauen 11a wobei andere Klauenflächen 18b der Klauen 11b etwa radial zu anderen Mitnahmeflächen 19b der Mitnahmeöffnungen 30 ausgerichtet sind. Diese sind als andere radiale Vertiefungen 17b ausgebildet. Die Klauen 11b ragen radial und axial mit Spiel in die dazu passenden Vertiefungen 17b eines als eine dicke Scheibe 13b ausgebildeten anderen Abtriebsteils 4b ein. Der Abtriebsteil 4b weist eine andere Nabe 14b auf, die kraftschlüssig mittels Preßsitz mit einer anderen Spindel 1b drehfest verbunden ist.

Am Umfang der Scheibe 13b sind zwischen den radialen Vertiefungen 17b schwalbenschwanzartige Nocken 21 entsprechend Fig. 1 bis 4 ausgebildet. Die Nocken 21 sind über die Klemmkörper 22 mit dem gehäusefesten Ring 23 verbindbar. Die Klemmkörper 22 werden durch einen anderen Abschlußtopf 27b axial gehalten, der drehfest mit der Spindel 1b verbunden ist.

Das Drehmoment des Antriebsmotors wird durch andere Klauenflächen 18b auf andere Mitnahmeflächen 19b der Scheibe 13b übertragen.

Andere Entriegelungselemente 10b umgreifen die Scheibe 13b mit Spiel. Der Abstand zu den Enden 25 der Entriegelungselemente 10b, die den Klemmkörpern 22 zugewandt sind, ist kleiner als zwischen den anderen Klauenflächen 18b und den anderen Mitnahmeflächen 19b der Scheibe 13b. Im Ausführungsbeispiel liegen die Klemmkörper 22 bedingt durch die Federkraft der zwischen diesen angeordneten Federelemente 24 an den zugeordneten Enden 25 der anderen Entriegelungselemente 10b an.

Die gezeigten Mitnahmevorrichtungen funktionieren folgendermaßen:

Bei Motorbetrieb wird das Zahnrad 7, 7a, 7b auf der Spindel 1, 1a, 1b verdreht. Dadurch werden zunächst die in Drehrichtung gesehen ersten Klemmkörper 22 durch die Entriegelungselemente 10, 10a, 10b in die Vertiefung des Nockens 21 geschoben und dadurch entriegelt. Dann erst nehmen die Klauenflächen 18, 18a, 18b die Mitnahmeflächen 19, 19a, 19b des Abtriebsteils 4, 4a, 4b mit, wodurch auch die zweiten Klemmkörper 22 und damit der Freilauf 28 als ganzes entriegelt sind und die Spindel 1, 1a, 1b mit Antriebsteil 3, 3a, 3b und Abtriebsteil 4, 4a, 4b sich frei drehen und Drehmoment übertragen können.

Bei ruhendem Antrieb der Spindel 1, 1a, 1b befinden sich die axialen Klauen 11, 11a, 11b und die Entriegelungselemente 10, 10a, 10b in Neutralstellung ohne Kontakt zu dem Abtriebsteil 4, 4a, 4b und den Klemmkörpern 22. Diese sind durch die Federelemente 24 in Klemmstellung gehalten. Beim Drehen der Spindel 1, 1a, 1b von Hand wird jeweils einer der Klemmkörper 22 in Richtung Klemmposition und der andere in Richtung Entriegelung mitgenommen, wobei die Klemmkörper 22 beim Drehrichtungswechsel ihre Funktion tauschen. Auf diese Weise besteht beim Handdrehen der Spindel 1, 1a, 1b immer eine feste Drehverbindung zum Gehäuse des Arbeitswerkzeugs. Dieser Sachverhalt kann dazu benutzt werden, mit einer Hand das Bohrfutter zu öffnen oder zu schließen bzw. es an- oder abzuschrauben. Dadurch erübrigt sich ein doppelhülsiges Bohrfutter, das teuer ist und mit zwei Händen bedient werden muß. Ein weiterer Vorteil der Mitnahmevorrichtung besteht darin, daß eine Schraube von Hand unter Benutzung des Arbeitswerkzeugs als wirksamen Schraubendreher ein- oder ausgeschraubt werden kann.

## Patentansprüche

1. Mitnahmevorrichtung für die Spindel (1, 1a, 1b) eines motorgetriebenen, handgeführten Arbeitswerkzeugs, insbesondere Bohr- oder Schlagschrauber, mit einem drehfest mit der Spindel (1, 1a, 1b) verbundenen Abtriebsteil (4, 4a, 4b), der in beiden Drehrichtungen der Spindel (1, 1a, 1b) über Klemmkörper (22) eines Freilaufs (28) mit einem gehäusefesten Ring (23) koppelbar ist, mit einem Antriebsteil (3, 3a, 3b), welcher gleichachsig zur Spindel (1, 1a, 1b) angeordnet ist und mit den Klemmkörpern (22) zusammenwirkende Entriegelungselemente (10, 10a, 10b) aufweist, welche bei angetriebenem Antriebsteil (3, 3a, 3b) die Klemmkörper freistellen, so daß der Abtriebsteil (4, 4a, 4b) vom gehäusefesten Ring (23) abgekoppelt und drehbar ist, und mit an dem Abtriebsteil (4, 4a, 4b) und dem Antriebsteil (3, 3a, 3b) vorgesehenen drehmomentübertragenden Mitnahmeflächen (18, 18a, 18b, 19, 19a, 19b) zum motorgetriebenen Antrieb der Spindel (1, 1a, 1b), wobei in Neutralstellung des Antriebsteils (3, 3a, 3b) die Mitnahmeflächen (18, 18a, 18b, 19, 19a, 19b) einen größeren Abstand voneinander aufweisen als der zwischen dem Entriegelungselement (10, 10a, 10b) und dem zugeordneten Klemmkörper (22) vorgesehene Abstand, **dadurch gekennzeichnet, daß** der Antriebsteil (3, 3a, 3b) von dem Entriegelungselement (10, 10a, 10b) räumlich getrennte Klauen (11, 11a 11b) aufweist und **daß** die Klauen (11, 11a 11b in den Abtriebsteil (4, 4a, 4b) einragen, wobei die drehmomentübertragenden Mitnahmeflächen (18, 18a, 18b, 19, 19a, 19b) durch Klauenflächen (18, 18a, 18b) der Klauen (11, 11a 11b) und durch diesen in der jeweiligen Drehrichtung zugewandten Mitnahmeflächen (19, 19a, 19b) von Mitnahmeöffnungen (30) ausgebildet sind.

2. Mitnahmevorrichtung nach Anspruch 1,
**dadurch gekennzeichnet, daß** die Spindel (1, 1a/ 1b) einteilig ausgebildet und durch den Abtriebsteil (4, 4a, 4b) und den Antriebsteil (3, 3a, 3b) hindurchgeführt ist, wobei die Spindel (1, 1a, 1b) dem Antriebsteil (3, 3a, 3b) zur Lagerung dient.

3. Mitnahmevorrichtung nach einem der Ansprüche 1 oder 2,
**dadurch gekennzeichnet, daß** der Antriebsteil (3, 3a, 3b) als Zahnrad (7, 7a, 7b) ausgebildet ist, wobei vorzugsweise das Zahnrad (7, 7a, 7b) Zähne (31) aus Kunststoff aufweist.

4. Mitnahmevorrichtung nach einem der Ansprüche 1 bis 3,
**dadurch gekennzeichnet, daß** die Klauen (11) axial in die als Ringsegmente (17) ausgebildeten Mitnahmeöffnungen (30) ragen.

5. Mitnahmevorrichtung nach einem der Ansprüche 1 bis 4,
**dadurch gekennzeichnet, daß** die Entriegelungselemente (10, 10a, 10b und die Klauen (11, 11a 11b) konzentrisch zueinander angeordnet sind, wobei die Entriegelungselemente (10, 10a, 10b) den Abtriebsteil (4, 4a, 4b) mit Spiel umgreifen.

6. Mitnahmevorrichtung nach einem der Ansprüche 1 bis 5,
**dadurch gekennzeichnet, daß** der Antriebsteil (3, 3a, 3b) mindestens zwei Paare von symmetrisch ausgebildeten Entriegelungselementen (10, 10a, 10b) und Klauen (11, 11a 11b) aufweist, mit paarweise gemeinsamer Mittellinie (12) und gleichem Abstandswinkel zwischen den benachbarten Mittellinien (12).

7. Mitnahmevorrichtung nach einem der Ansprüche 1 bis 6,
**dadurch gekennzeichnet, daß** der Abtriebsteil (4, 4a, 4b) als tiefgezogenes Blechteil (13) oder als Fließpreßteil (13a) oder als eine dicke Scheibe (13b) ausgebildet ist, wobei das Blechteil (13) oder das Fließpreßteil (13a) oder die Scheibe (13b) an ihrem Umfang Nocken (21) für die Klemmkörper (22) des Freilaufs (28) aufweisen und vorzugsweise ein abtriebfester Abschlußtopf (27, 27b) in spielfreiem Kontakt zum Blechteil (13) oder zum Stahlteil (13b) steht und zu den Klemmkörpern (22) des Freilaufs (28) Axialspiel aufweist.

8. Mitnahmevorrichtung nach Anspruch 7,
**dadurch gekennzeichnet, daß** die Nocken (21) und die zugeordneten Klemmkörper (22) paarweise angeordnet sind und zwischen den Klemmkörpern (22) Federelemente (24) angeordnet sind.

9. Mitnahmevorrichtung nach einem der Ansprüche 1 bis 8,
**dadurch gekennzeichnet, daß** die Klauenflächen (18, 18b) der Klauen (11, 11b radial zu den Mitnahmeflächen (19, 19b) der Mitnahmeöffnungen (30) ausgerichtet sind.

10. Mitnahmevorrichtung nach einem der Ansprüche 1 bis 9,
**dadurch gekennzeichnet, daß** der Abtriebsteil (4, 4a) formschlüssig mit der Spindel (1, 1a verbunden ist.

## Claims

1. A driver device for the spindle (1, 1a, 1b) of a motor-driven, hand-operated tool, in particular a drill or hammer drill, with a driven member (4, 4a, 4b) which is connected to the spindle (1, 1a, 1b) in such a manner that it cannot rotate and which can be engaged with a ring (23) fixed to the housing by means of clamping elements (22) on a freewheel (28) in both directions of rotation of the spindle (1, 1a, 1b), a drive member (3, 3a, 3b) which is positioned on the same axis as the spindle (1, 1a, 1b) and has unlocking elements (10, 10a 10b) which act together with the clamping elements (22) and, when the drive member (3, 3a, 3b) is being driven, release the clamping elements (22) in such a manner that the drive member (4, 4a, 4b) is disengaged from the ring (23) fixed to the housing and can be rotated, and with torque-transmitting driver surfaces (18, 18a, 18b and 19, 19a, 19b) provided on the driven member (4, 4a, 4b) and the drive member (3, 3a, 3b) for the motor-driven driving of the spindle (1, 1a, 1b) when the drive member (3, 3a, 3b) is in the neutral position the driver surfaces (18, 18a, 18b and 19, 19a, 19b) being positioned a greater distance apart than the distance between the unlocking element (10, 10a, 10b) and the associated clamping element (22),
**characterised in that**
the drive member (3, 3a, 3b) has claws (11, 11a, 11b) which are spatially separated from the unlocking element (10, 10a, 10b) and that the claws (11, 11a, 11b) project into the driven member (4, 4a, 4b), the torque-transmitting driver surfaces (18, 18a, 18b and 19, 19a, 19b) taking the form of claw surfaces (18, 18a, 18b) on the claws (11, 11a, 11b) and of driver surfaces (19, 19a, 19b) on driver openings (30) facing said claw surfaces (18, 18a, 18b) in the direction of rotation.

2. A driver device in accordance with claim 1,
**characterised in that**
the spindle (1, 1a, 1b) is designed as one piece and passes through the driven member (4, 4a, 4b) and the drive member (3, 3a, 3b), the spindle (1, 1a, 1b serving as a bearing for the drive member (3, 3a, 3b).

3. A driver device in accordance with one of claims 1 or 2,
**characterised in that**
the drive member (3, 3a, 3b) takes the form of a toothed wheel (7, 7a, 7b), the toothed wheel (7, 7a, 7b) preferably having teeth (31) made of plastic.

4. A driver device in accordance with one of claims 1 to 3,
**characterised in that**
the claws (11) extend axially into the driver openings (30) which are designed as annular segments (17).

5. A driver device in accordance with one of claims 1 to 4,
**characterised in that**
the unlocking elements (10, 10a, 10b) and the claws (11, 11a, 11b) are positioned concentrically in relation to each other, the unlocking elements (10, 10a, 10b) encompassing the driven member (4, 4a, 4b) with play.

6. A driver device in accordance with one of claims 1 to 5,
**characterised in that**
the drive member (3, 3a, 3b) has at least two pairs of symmetrically formed unlocking elements (10, 10a, 10b and claws (11, 11a, 11b), each pair having a common centre line (12) and an identical distance angle between adjacent centre lines (12).

7. A driver device in accordance with one of claims 1 to 6,
**characterised in that**
driven member (4, 4a, 4b) is designed as a deep-drawn metal plate (13) or extruded plate (13a) or thick disk (13b), the metal plate (13) or the extruded plate (13a) or the disk (13b) having cams (21) for the clamping element (22) on the freewheel (28) around its circumference and preferably having a cover plate (27, 27b) fixed to the driven member (4, 4a, 4b) in play-free contact with the metal plate (13) or the steel plate (13b) and having axial play in relation to the clamping elements (22) on the freewheel (28).

8. A driver device in accordance with claim 7,
**characterised in that**
the cams (21) and the associated clamping elements (22) are positioned in pairs and that spring elements (24) are positioned between the clamping elements (22).

9. A driver device in accordance with one of claims 1 to 8,
**characterised in that**
the claw surfaces (18, 18b) of the claws (11, 11b) are oriented radially in relation to the driver surfaces (19, 19b) of the driver openings (30).

10. A driver device in accordance with one of claims 1 to 9,
**characterised in that**
the driven member (4, 4a) is connected in a positive fit to the spindle (1, 1a).

## Revendications

1. Dispositif d'entraînement pour la broche (1, 1a, 1b) d'un outil de travail guidé manuellement, entraîné par un moteur, en particulier un tournevis perceur ou percuteur, avec une partie menée (4, 4a, 4b) reliée de façon assujettie en rotation à la broche (1, la, 1b), partie menée susceptible d'être couplée dans les deux sens de rotation de la broche (1, 1a, 1b), par l'intermédiaire de corps de serrage (22) d'une roue libre (28), à une bague (28) fixée au boîtier, avec une partie menante (3, 3a, 3b) disposée coaxialement par rapport à la broche (1, 1a, 1b et présentant des éléments de déverrouillage (10, 10a, 10b) coopérant avec les corps de serrage (22) et libérant les corps de serrage lorsque la partie menante (3, 3a, 3b) est entraînée, de manière que la partie menée (4, 4a, 4b) soit désaccouplée de la bague (23) fixée au boîtier et susceptible de tourner, et avec des surfaces d'entraînement (18, 18a, 18b, 19, 19a, 19b) transmettant un couple, prévues sur la partie menée (4, 4a, 4b) et la partie menante (3, 3a, 3b) pour l'entraînement, par un moteur, de la broche (1, 1a, 1b) où, à la position neutre de la partie menante (3, 3a, 3b), les faces d'entraînement (18, 18a, 18b, 19, 19a, 19b) présentent un espacement mutuel, supérieur à l'espacement prévu entre l'élément de déverrouillage (10, 10a, 10b) et le corps de serrage (22) associé, **caractérisé en ce que** la partie menante (3, 3a, 3b) présente des griffes (11, 11a 11b) séparées spatialement de l'élément de déverrouillage (10, 10a 10b) et **en ce que** les griffes (11, 11a, 11b) pénètrent dans la partie menée (4, 4a, 4b), où les faces d'entraînement (18, 18a, 18b, 19, 19a, 19b) transmettant un couple sont réalisées par des faces de griffe (18, 18a, 18b) des griffes (11, 11a, 11b), et par des faces d'entraînement (19, 19a, 19b), tournées vers celles-ci dans le sens de rotation respectif, d'ouvertures d'entraînement (30).

2. Dispositif d'entraînement selon la revendication 1, **caractérisé en ce que** la broche (1, 1a, 1b est réalisée d'une seule pièce et passée à travers la partie menée (4, 4a, 4b) et la partie menante (3, 3a, 3b), la broche (1, 1a, 1b) servant de palier de rotation à la partie menante (3, 3a, 3b).

3. Dispositif d'entraînement selon l'une des revendications 1 ou 2, **caractérisé en ce que** la partie menante (3, 3a, 3b) est réalisée sous la forme de roue dentée (7, 7a, 7b), de préférence la roue dentée (7, 7a, 7b) présentant des dents (31) en matière synthétique.

4. Dispositif d'entraînement selon l'une des revendications 1 à 3, **caractérisé en ce que** les griffes (11) pénètrent axialement dans les ouvertures d'entraînement (30) réalisées sous forme de segments d'anneau (17).

5. Dispositif d'entraînement selon l'une des revendications 1 à 4, **caractérisé en ce que** les éléments de déverrouillage (10, 10a, 10b et les griffes (11, 11a 11b) sont concentriques entre eux, les éléments de déverrouillage (10, 10a, 10b entourant avec du jeu la partie menée (4, 4a, 4b).

6. Dispositif d'entraînement selon l'une des revendications 1 à 5, **caractérisé en ce que** la partie menante (3, 3a, 3b) présente au moins deux paires d'éléments de déverrouillage (10, 10a, 10b et de griffes (11, 11a 11b) de configuration symétrique, avec, par paires, un axe (12) commun et des angles d'espacement identiques entre les axes (12) voisins.

7. Dispositif d'entraînement selon l'une des revendications 1 à 6, **caractérisé en ce que** la partie menée (4, 4a, 4b) est réalisée sous la forme de pièce en tôle (13) obtenue par étirage profond, ou comme pièce extrudée (13a), ou sous forme de disque (13b) épais, la pièce en tôle (13) ou la pièce extrudée (13a) ou le disque (16b) présentant, sur leur périphérie, des ergots (21) pour les corps de serrage (22) de la roue libre (28) et, de préférence, un pot de fermeture (27, 27b) fixé à la partie menée, en contact sans jeu par rapport à la pièce en tôle (13) ou par rapport à la pièce en acier (13b) et présentant un jeu axial par rapport au corps de serrage (22) de la roue libre (28).

8. Dispositif d'entraînement selon la revendication 7, **caractérisé en ce que** les ergots (21) et les corps de serrage (22) associés sont disposés par paires et des éléments élastiques (24) étant disposés entre les corps de serrage (22).

9. Dispositif d'entraînement selon l'une des revendications 1 à 8, **caractérisé en ce que** les faces de griffe (18, 18b) des griffes (11, 11b) sont orientées radialement par rapport aux faces d'entraînement (19, 19b) des ouvertures d'entraînement (30).

10. Dispositif d'entraînement selon l'une des revendications 1 à 9, **caractérisé en ce que** la partie menée (4, 4a) est reliée par une liaison à ajustement de forme à la broche (1, 1a).
